(19) Europäisches Patentamt
European Patent Office
Office européen des brevets

(11) **EP 2 991 953 B1**

(12) **EUROPEAN PATENT SPECIFICATION**

(45) Date of publication and mention
of the grant of the patent:
**06.05.2020 Bulletin 2020/19**

(51) Int Cl.:
**C04B 41/48** *(2006.01)*   **C04B 41/00** *(2006.01)*
**C04B 111/00** *(2006.01)*

(21) Application number: **14791939.3**

(22) Date of filing: **23.04.2014**

(86) International application number:
**PCT/US2014/035096**

(87) International publication number:
**WO 2014/179128 (06.11.2014 Gazette 2014/45)**

(54) **USE OF A COMPOSITION FOR TREATMENT OF STONE**

VERWENDUNG EINER ZUSAMMENSETZUNG ZUR BEHANDLUNG VON GESTEIN

UTILISATION D'UNE COMPOSITION POUR LE TRAITEMENT DE PIERRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2013 CN 201310156316**

(43) Date of publication of application:
**09.03.2016 Bulletin 2016/10**

(73) Proprietor: **Ecolab USA Inc.
St. Paul, MN 55102 (US)**

(72) Inventor: **XU, Jianjie
Shanghai 200120 (CN)**

(74) Representative: **Godemeyer Blum Lenze
Patentanwälte
Partnerschaft mbB - werkpatent
An den Gärten 7
51491 Overath (DE)**

(56) References cited:
**EP-A1- 0 207 307          EP-A2- 0 353 388
CN-A- 102 180 702          US-A- 4 738 876
US-A- 5 830 536            US-A- 6 156 108
US-A1- 2009 324 936        US-A1- 2012 149 623**

EP 2 991 953 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field

The invention relates to the surface treatment technology of stone floor and, in particular, to a composition for the crystal finish treatment of a stone floor, which is used for hardening and brightening the surface of a stone floor at the same time, so as to provide the crystal finish of the stone surface with high gloss while affording protection therefor, and endow it with an improved anti-slip property.

### Background Art

Floor care products are commonly used in hotels and commercial facilities, and are especially applied for the surface treatment of stone floors in a commercial environment. In the surface treatment of stone floors, on one hand, there is a need to provide the floor crystal finish with relatively good wear resistance, so as to protect the floor surface and prolong the life of the floor; on the other hand, there is a need to enhance the gloss of the floor surface, so as to provide an aesthetic appearance.

At present, in the crystal finish treatment of stone surfaces, almost all products contain waxes. The fundamental purpose of the waxes is to provide oily gloss and a better polishing property. However, this can also result in a problem with slipping on the stone floor.

Generally, the wax used in a surface polishing agent for stone is an montan wax emulsion. This is a natural wax extracted from some kinds of lignite or brown coal by solvent extraction. The component is long-chain (C24-C30) carboxylates, free long-chain organic acids, long-chain alcohols, hydrocarbons and resins. In addition, carnauba wax is also used. The montan wax and carnauba wax are both natural waxes, the melting points of which are about 85-90°C, the anti-slip property, the wear resistance and the gloss of which all are relatively poor.

US patent No. 4,738,876 "Stone surface treating methods and compositions" and EP Patent No. 0207307 describe a two-step treatment procedure using a composition containing oxalic acid and a composition containing such as magnesium hexafluorosilicate or zinc hexafluorosilicate as the floor crystals to polish the surface of stone such as marble. The process is a two-step process, in which the stone surface is firstly treated with the oxalic acid composition for cleaning, and then with fluorosilicate for crystal finish treatment.

EP Patent No. 0617099 "Polishing composition and method of treating calcium carbonate-containing surfaces" describes a composition comprising an organic oxygen-containing compound, a hexafluorosilicate and water for the treatment of a marble surface. However, the polishing composition of a calcium carbonate-containing surface has poor adaptability to different types of stone, so the application range thereof is limited.

US patent No. 5,830,536 "Crystallization agent stone floor maintenance composition and method" describes a composition and method for maintaining the appearance of stone floor surfaces such as marble, that avoids the need for use of oxalic acid. The composition comprises magnesium silicofluoride, a fatty acid, an alumina abrasive, triethanolamine, silicone oil and water as balance. The crystallization agent used in the document contains abrasives, so there is a need for steps of passing through water and drying by absorption after polishing.

US patent 4,756,766 "Method of cleaning and conditioning surfaces" describes a procedure for cleaning and caring for marble and similar materials, in which a first mixture formed from a zinc sulfate solution, an abrasive and a thickening agent is used to mechanically and chemically clean and prepare for a second aqueous solution formed of fluosilicates of the group consisting of the alkaline earth metals and zinc, and a monocarboxylic aliphatic organic acid, such as acetic acid. The first mixture is used in a polishing device and is flushed and removed completely with water. The second solution is applied and partially removed from the polishing device. After the stone has been treated by the cleaning and caring composition in the document, the gloss of stone is not enough, with relatively low relative brightness.

In the aforementioned patent documents, the improvement of gloss in a stone surface by means of a specific composition or crystallization agent for the surface treatment of stone and a treatment process is mentioned, but it does not disclose how to deal with the negative effect of an increase in slipperiness brought along with the improvement of the floor gloss.

### Summary of the Invention

An object of the present invention is to provide a composition for the crystal finish treatment of floor stone, which can be used for a one-step treatment of the stone surface, i.e. hardening and brightening the crystal finish of a floor at the same time, and also to overcome the defect of the crystal finish agent in the prior art that a poor anti-skid property is created while a high gloss is provided, and as a result, the demands for high gloss and an improved anti-slip property are satisfied.

In order to achieve the above objects, in one aspect, the present invention provides the use of a composition for the surface treatment of stone, comprising 0.5-5% by weight of a polyolefin wax, 10-30% by weight of fluorosilicic acid or a fluorosilicate, 1-6% by weight of an acid conditioner, 0.5-5% by weight of a fast drying agent and water as balance, wherein said polyolefin wax is added in the form of an emulsion, and the solid content of the polyolefin wax emulsion is in a range of 20% to 50%.

The present disclosure also provides a process for preparing the aforementioned composition for the surface treatment of stone, comprising the following steps:

(i) adding fluorosilicic acid or a fluorosilicate to water, and stirring till said fluorosilicic acid or fluorosilicate is dissolved completely in water;
(ii) adding an acid conditioner to the resultant solution of step (i) and stirring to homogeneity;
(iii) adding a polyolefin wax emulsion to the resultant solution of step (ii) and stirring to homogeneity; and
(iv) adding a fast drying agent to the resultant solution of step (iii) and stirring to homogeneity,

wherein the mass percent contents of said polyolefin wax, fluorosilicic acid or fluorosilicate, acid conditioner and alcohol ether fast drying agent are 0.5-5%, 10-30%, 1-6% and 0.5-5% respectively, with water as balance; wherein the polyolefin wax is added in the form of an emulsion, and the solid content of the polyolefin wax emulsion is in a range of 20% to 60%.

The present disclosure also discloses stone comprising the crystallization agent of the present invention.

And the present disclosure discloses a process for manufacturing the aforementioned stone, comprising spraying the aforementioned crystallization agent of the present invention on stone for buffing and polishing, so that a coating of said crystallization agent is formed on said stone.

The crystallization agent used in the present invention based on a polyolefin wax, compared with the crystallization agent in the prior art, possesses an improved anti-slip property while improving the gloss. In the meanwhile, the treated stone surface has enhanced mechanical performance, and better wear resistance and chemical corrosion, and water-soluble stains are difficult to penetrate into the interior of the stone. The stone surface treated by the crystallization agent of the present invention can be cleaned with water, so maintenance is convenient and rapid, compared with conventional waxing treatment, thus reducing maintenance costs.

## Brief Description of the Drawings

Figure 1 is a curve diagram of the influence of crystallization agents with different contents of polypropylene wax on the gloss of a marble surface;
Figure 2 is a curve diagram of the influence of crystallization agents with different contents of polypropylene wax on the coefficient of friction of a marble surface.

A variety of embodiments of the present invention will be described in detail with reference to the accompanying drawings, in which similar symbol references always represent similar parts throughout a plurality of views. The disclosure of a variety of embodiments does not intend to limit the scope of protection of the present invention. The accompanying drawings of the description of the present invention are set forth only as an exemplary illustration of the present invention rather than as a limitation to the embodiments of the present invention.

## Detailed Description of the Invention

The embodiments of the present invention are neither limited to specific stone, nor to the surface treatment composition and preparation process thereof, as it should be understood by those skilled in the art that corresponding variations can be made. It should be understood further that the object of all terms used in the present invention is to describe particular embodiments merely, and does not intend to function as a limitation in any way or scope. Unless otherwise defined herein, the meanings of all technological and scientific terms used in the present invention are the same as the meanings understood generally by those of ordinary skill in the art of the embodiments of the present invention.

The range of values described in the description includes the values to restrict the range. The term "about" used in the present invention intends to restrict the values modified by it, with the result that the values are represented as variables in an error range, or indicates variation of value quantities possibly occurring. No matter whether they are modified by the term "about", equivalents of the quantities are included in the claims.

According to embodiments of the present invention, a composition for the surface treatment of stone is provided, which composition comprises 0.5-5% by weight of polyolefin wax, 10-30% by weight of fluorosilicic acid or a fluorosilicate, 1-6% by weight of an acid conditioner, 0.5-5% by weight of an alcohol ether fast drying agent and water as balance;

wherein the polyolefin wax is added in the form of a polyolefin wax emulsion, and the content of polyolefin wax based on the total mass of the polyolefin wax emulsion is in a range of 20% to 60%. The composition is used for treating the surface of various kinds of stone, to provide high gloss and a high anti-slip property, so as to meet the demands for daily caring, beauty and safety of a floor.

Stone

The stone in the present invention mainly refers to stone which can be applied for floors and walls, such as marble, terrazzo or some granite, etc.

In general, marble contains calcium compounds as essential components, and also contains other impurities such as magnesium, sodium, silicon, etc.; the calcium compounds are affected in air by carbon dioxide, carbides and moisture, resulting in poor weathering resistance, and the stone surface being prone to losing gloss quickly, so attention should be paid to the maintenance of marble stone.

Generally, terrazzo is a mixture formed with cement and marble gravel as its essential components. The defects of terrazzo stone mainly lie in it being prone to weathering and aging, and it has a rough surface, resulting in poor resistance to contamination and difficult to clean after it has been contaminated; as a result, the surface finish of the stone surface is difficult to restore even though waxing maintenance is carried out in a later period. Accordingly, it is important for prolonging the service life of the stone and maintaining the surface gloss of the stone, that the crystal finish treatment is carried out immediately after the terrazzo stone is manufactured.

Granite contains silicon dioxide as an essential component, and it has a hard texture and a good resistance to acid and to weather; however, it is prone to natural weathering and abrasion when in long-term use, especially when it is used in a damp environment, so it is more necessary to provide certain protection for granite.

When the crystallization agent of the present invention is employed to treat the surface of stone, so not only the stone micropores are blocked to achieve weather resistance and humidity resistance, but also a certain air permeability is achieved to prevent the stone from mildew and degrading. The crystallization agent used in the present invention can be widely applied for stone where gloss and anti-slip properties are required.

Polyolefin wax

The crystallization agent used in the present invention also comprises dispersible polyolefin wax. The polyolefin wax can be linear or nonlinear, modified or unmodified hydrophobic polyolefin wax, at least partially with or without functional groups. Said olefin is propylene.

In the polyolefin wax with functional groups, the functional groups can include, but are not limited to, a hydroxyl, amino, mercapto, halogen, ether, carboxyl, carboxylic anhydride, sulfonic acid, phosphoric acid, phosphonic acid, carboxamide, carboxylate, sulfonate, phosphate, phosphonate or nitrile group.

The number-average molecular weight $M_n$ of the polyolefin wax of the present invention is between about 1000 and 20000, and the number-average molecular weight $M_n$ of the polyolefin wax is preferably between about 2000 and 8000. The dropping point of the polyolefin wax is about 60°C to 180°C, preferably about 80°C to 160°C, more preferably 120°C to 160°C (ASTM D3954-1994(2004), Standard Test Method for Dropping Point of Waxes).

In general, polyolefin wax is prepared by a cracking process or a synthetic process. A process for preparing a polyolefin wax with a (meth)acrylate groups is mentioned in WO 2006/092425.

A suitable polyolefin wax is available commercially, such as America Honeywell (A-C polyethylene), Marcus Oil & Chemical Co. (Texas, America, Marcus products), Germany BASF (PE wax and synthetic modified polyolefin wax), Dutch Dow Chemical (PEG wax), etc.

The polyolefin wax of the present invention is a polypropylene wax.

The polyolefin wax of the present invention is used to provide oily gloss and better polishing application, and has a good anti-slip property. The polyolefin wax accounts for about 0.5% to 5%, preferably about 1.0% to 3.0%, more preferably 1.5% to 2.5% by weight of said crystallization agent; the present inventor has found that the polyolefin wax in this range provides a gloss level tending to be stable, and has a good anti-slip property. However, when the content of polyolefin wax is beyond this range, the floor smoothness increased sharply, while the gloss did not improve remarkably.

In order to facilitate the use of the crystallization agent of the present invention, the polyolefin wax of the present invention is used as a polyolefin wax dispersed by an emulsifier, which is present in the form of an oil-in-water emulsion. The polyolefin wax emulsion is prepared by adding an emulsifier to reduce the surface tension of the oil and water phases, so that the polyolefin wax is dispersed uniformly in water, so as to form an emulsion liquid under the action of an external force by means of the directional action of the emulsifier. The polyolefin wax in the form of an emulsion has stable performances and uniform film-forming, facilitates storage, and is easy to compound with water solutions or emulsions of other materials for use.

The polyolefin wax emulsion of the present invention can be formed by employing a suitable emulsifier to emulsify a polyolefin wax. The emulsifier used can be a non-ionic surfactant, a cationic surfactant, or a combination thereof. Since a cationic emulsion is positively charged, exhibits a repulsive effect on dust, and has a good stability in an acid system, a cationic emulsifier is preferably used for the preparation of a polyolefin wax emulsion, and hence a cationic polyolefin wax emulsion is preferred in the present invention.

Generally, the polyolefin wax emulsion is prepared by subjecting a polyolefin wax to oxidation modification, to introduce functional groups such as -COOH, -OH, etc., so that the emulsifying property of the polyolefin wax is improved; in this process, the raw material is a polyolefin wax; the oxidant is air; the reaction temperature is 150-200°C; the reaction pressure is 0.5-1.5 MPa and the reaction time is 2-8 h; the process is the oxidation modification of a polyolefin wax, the technology of which has been relatively mature. Then, the polyolefin wax which has been subjected to oxidation modification is emulsified at an emulsification temperature of 95-140°C and an emulsification pressure of 0.2-0.4 MPa, and the selection of an emulsifier is described hereinafter in detail.

The HLB value of the emulsifier used in the present invention is 8 to 18, wherein an equation for calculating the HLB value of a nonionic surfactant is as follows:

$$HLB = \frac{The\ mass\ of\ hydrophilic\ groups \times 20}{The\ total\ mass\ of\ surfactant}$$

The HLB value of an ionic surfactant can be calculated by reference to the following Davis equation, i.e:

$$HLB= 7 + \sum contribution\ values\ of\ hydrophilic\ groups - \sum contribution\ values\ of\ lipophilic\ groups.$$

In this situation, the contribution values of various common hydrophilic groups and lipophilic groups can be looked up from documents.

If more than two emulsifiers are used, the total HLB value is the sum of the HLB value of each surfactant multiplied by the mass fraction thereof.

The cationic surfactant is preferably an alkyl ammonium salt, wherein the alkyl is a linear or nonlinear alkyl with 12-20 carbon atoms, and said ammonium salt is a primary, secondary, tertiary or quaternary ammonium salt, such as dodecyl ammonium chloride and cetyltrimethylammonium bromide.

The content of the polyolefin wax in the polyolefin wax emulsion is controlled at a proper ratio, i.e. between about 20% and 60% based on the total mass of the polyolefin wax emulsion. The polyolefin wax emulsion has a particle size in a range of about 50 to 200 nm, as determined by a BDL-B surface potential particle size analyzer. The polyolefin wax emulsion has a pH value in a range of 4 to 10.

The polyolefin wax emulsion of the present invention is preferably a cationic polyolefin wax emulsion, while the content of the polyolefin wax in the whole formulation of the crystallization agent is kept in a range of about 0.5% to 5%, preferably in a range of 1.0% to 2.5%. The polyolefin wax emulsion of the present invention contains about 20% to about 60% by weight of a polyolefin wax, has a particle size in a range of about 50 to 200 nm, and has a viscosity of about 100 to 1000 cps.

Commercially available products can also be chosen for the polyolefin wax emulsion of the present invention, such as AQUACER 593, AQUACER 595, AQUACER 597, AQUACER 1401 and AQUACER 3500 of BYK Company; Michem Emulsion 28640, Michem Emulsion 11226, Michem Emulsion 2864043240 and Michem Emulsion 65140 of Michelman Company.

Fluorosilicic acid or fluorosilicate

Those skilled in the art can select suitable fluorosilicic acid or a fluorosilicate for use in the present invention as required. The fluorosilicate can be optionally selected from sodium fluorosilicate, potassium fluorosilicate, magnesium fluorosilicate, calcium fluorosilicate, zinc fluorosilicate and chromium fluorosilicate, and also can be one or a combination of several of them. The fluorosilicate is preferably magnesium fluorosilicate ($MgSiF_6 \cdot 6H_2O$). The mass percentage of the fluorosilicic acid or fluorosilicate in the whole formulation of the crystallization agent is in a range of about 10% to 30%.

In general, the fluorosilicate together with the other components of the crystallization agent penetrates to the treated stone surface, and the fluorosilicate reacts with the calcium-containing components in the stone to form a dense intermediate layer between a surface coating of the stone and the stone surface, so as to enhance the hardness of the stone surface, improve the mechanical properties of the stone, and prevent water molecules inside the stone from evaporating and external water from infiltrating into the stone, and thereby solve the water infiltration prevention process in the surface treatment of stone. Especially with regard to marble with a poor acid resistance, the treated marble has an enhanced acid resistance.

Acid conditioner

In the composition of the crystallization agent of the present invention, preferably the first order dissociation constant (pKa1) of the acid conditioner is in the following range: $1.0 \leq pKa1 \leq 6.0$, preferably in a range of 2.5 to 4.5. In general, the acidity of an acid mostly depends on the first order dissociation constant thereof; the lower the first order dissociation constant, the stronger the acidity.

In addition, compounds, which are selected as the acid conditioner in the present invention are fumaric acid, citric acid, 2,3-dihydroxybutanedioic acid, and mixtures thereof. The content of the acid conditioner in the whole formulation of the crystallization agent is in a range of about 1% to 6%.

In the present invention, the acid conditioner is used for accelerating the ionization of calcium in stone, so that calcium ions in the stone react with fluorosilicate ions more sufficiently to form a crystal finish.

Fast drying agent

The fast drying agent of the present invention mainly includes fast drying agents of lower alcohol ethers of ethylene glycol and propylene glycol, which are generally alcohol ether fast drying agents with a water solubility, and have an evaporation rate larger than 0.01 (the evaporation rate of butyl acetate is 1). The fast drying agent of the present invention include ethylene glycol methyl ether, ethylene glycol butyl ether, diethylene glycol butyl ether, propylene glycol methyl ether, dipropylene glycol methyl ether, propylene glycol propyl ether, dipropylene glycol propyl ether, propylene glycol butyl ether, propylene glycol methyl ether acetate, dipropylene glycol methyl ether acetate, dipropylene glycol dimethyl ether, diethylene glycol methyl ether: the fast drying agent can be one or a combination of them. Comparatively speaking, an alcohol ether with a large molecular weight has relatively low volatility. The corresponding selection can be made by a skilled person in the art as actually required.

The alcohol ether fast drying agent of the present invention can coordinate and control the evaporation rate of each component of the crystallization agent, to improve the efficiency of the whole polishing process, leading to a dry and glossy effect on the treated stone surface in a short period of time. In addition, not only hydrophobic compounds but also water-soluble compounds can be dissolved in alcohol ether compounds due to the presence of both ether bonds and hydroxyls in the alcohol ether compounds, so the alcohol ether compounds have a good solvent compatibility. Moreover, the alcohol ether compounds can keep the leveling property of the crystallization agent product of the present invention coated on the surface of marble.

The content of the alcohol ether fast drying agent in the whole formulation of the crystallization agent is in a range of about 0.5% to 5%.

Water

Water is not only a carrier, but also a diluent which help to pre-disperse the active components of the crystallization agent, leading to a very good compatibility during the crystallization treatment; in addition, costs can be reduced using water, resulting in a very good economic benefit. Water used in the present invention can be water from clean water sources, such as tap water, or deionized water, without strict restrictions to whether there is a need for the pretreatment of the water. The addition of water can be adjusted correspondingly in the case that the mass percentage ranges of the other components of the present invention are satisfied.

Auxiliary agents

Other auxiliary agents known to those skilled in the art can be added to the crystallization agent of the present invention, to enhance other properties of the crystallization agent; for example, a dust absorbent, a gloss enhancer, a cleaning agent and so on can be added. This also falls into the protective scope of the present invention. Generally, the addition amount of the auxiliary agents does not exceed 1% of the total mass of the crystallization agent composition.

**Example 1: Preparation of crystallization agent of the present invention**

A crystallization agent product A of the present invention is prepared by adopting the following formulation for a crystallization agent.

| Component | Percentage | | Function |
|---|---|---|---|
| deionized water | 68.5% | | |
| magnesium fluorosilicate | 20.0%fluorosilicate | | |
| fumaric acid | | 2.0% | acid conditioner |
| citric acid | | 2.0% | acid conditioner |
| polypropylene wax emulsion | | | |
| (with solid content of 40%) | 5% | | brightening agent |
| ethylene glycol monobutyl ether | 2.5% | | fast drying agent |

A preparation process is as follows:
Magnesium fluorosilicate is added to deionized water, and stirred by a paddle stirrer for 15-20 minutes with a stirring rate controlled at 60 rpm till said magnesium fluorosilicate is dissolved completely in water; fumaric acid and citric acid are added to the resultant solution, and stirred for 5 minutes; subsequently, a polypropylene wax emulsion (AQUACER 1401 of BYK Company) is added, and stirred with a stirring rate adjusted to 40 rpm for 10 minutes to homogeneity; finally, ethylene glycol monobutyl ether is added, and stirred for 20 minutes. In the whole process, the temperature should be controlled at 10-30°C. Moreover, the containers used should not be glass articles.

**Example 2: Preparation of crystallization agent not according to the invention**

Crystallization agent product B not according to the present invention is prepared by a preparation process the same to that in example 1 according to the following formulation of crystallization agent.

| Component | Percentage | | Function |
|---|---|---|---|
| deionized water | 70.2% | | |
| magnesium fluorosilicate | 18.5% | fluorosilicate | |
| fumaric acid | | 2.0% | acid conditioner |
| citric acid | | 1.0% | acid conditioner |
| tartaric acid | | 1.0% | acid conditioner |
| polytetrafluoroethylene wax emulsion | | | |
| (with solid content of 60%) | | 3.3% | brightening agent |
| diethylene glycol monoethyl ether | | 2.5% | fast drying agent |
| calcium chloride | | 1.5% | color enhancer |

The preparation process is as follows:
Magnesium fluorosilicate is added to deionized water, and stirred by a paddle stirrer for 15-20 minutes with a stirring rate controlled at 60 rpm till said magnesium fluorosilicate is dissolved completely in water; fumaric acid, citric acid and tartaric acid are added to the resultant solution, and stirred for 5 minutes; calcium chloride is added and stirred for 5 minutes; subsequently, a polytetrafluoroethylene wax emulsion (TE 3875 of Dupont Company) is added, and stirred with a stirring rate adjusted to 40 rpm for 10 minutes to homogeneity; finally, diethylene glycol monoethyl ether is added, and stirred for 20 minutes. In the whole process, the temperature should be controlled at 10-30°C. Moreover, the containers used should not be glass articles.

**Example 3: Property test of floor containing the crystallization agent of the present invention**

The influence on the gloss and smoothness of a stone surface after the crystallization agent products are applied to the stone is mainly tested in the present invention. The test methods are as follows.

(1) Measurement of surface gloss

Instrument: BYK Tri-gloss meter

ASTM method: D1455

Test steps: ensuring there is no dust or particles on the surface of an object to be tested, and if there is, wiping the surface with a clean and dry wiping cloth, measuring the gloss of 60 degree by the gloss meter, and measuring an average value of at least ten different points on the surface of the object. A standard deviation is recorded at the same time.

(2) Measurement of anti-slip property

Title: Measurement method of static coefficient of friction (SCOF)
Instrument: BOT 3000
Method: ANSI/NFSI B101.1
Test steps: ensuring there is no dust or particles on the surface of an object to be tested, and if there is, wiping the surface with a clean and dry wiping cloth, measuring the static coefficient of friction by BOT 3000, and measuring an average value of at least ten different points on the surface of the object. A standard deviation is recorded at the same time.

In the following embodiments, four crystallization agent products are subjected to the tests of gloss and anti-slip property in the present invention, wherein sample 1 is the K2 crystallization agent of Coor&Kleever Company, sample 2 is the crystallization agent Spray N' Buff crystallization agent of NCL Company, and sample 3 and sample 4 are the crystallization agent products A and B obtained in examples 1 and 2 of the present invention, respectively. The four crystallization agent products are used to separately treat four kinds of marble base material, including brown marble, black marble, light-colored marble and veined marble, and by the aforementioned measurement methods, the gloss and coefficient of friction thereof are recorded to obtain table 1. In this situation, for the spraying, buffing and polishing process of the crystallization agent, spraying, buffing and polishing technology well known in the art can be used.

Sample 1#:K2 crystallization agent, Coor&Kleever Company
Sample 2#:Crystallization agent Spray N' Buff, NCL Company
Sample 3#:The crystallization agent A based on polypropylene wax of the present invention
Sample 4#: The crystallization agent B based on polytetrafluoroethylene wax not according to the present invention

Table 1:

|  |  | 1# | 2# | 3# | 4# |
|---|---|---|---|---|---|
| brown marble | gloss of 60° | 80.5 | 79.9 | 83.5 | 83.8 |
|  | coefficient of friction (COF) | 0.46 | 0.50 | 0.54 | 0.56 |
| black marble | gloss of 60° | 78.0 | 79.8 | 81.0 | 80.8 |
|  | coefficient of friction (COF) | 0.48 | 0.46 | 0.56 | 0.55 |
| light-colored marble | gloss of 60° | 70.8 | 71.3 | 74.8 | 74.0 |
|  | coefficient of friction (COF) | 0.51 | 0.49 | 0.56 | 0.57 |
| veined marble | gloss of 60° | 72.9 | 72.5 | 75.6 | 76.8 |
|  | coefficient of friction (COF) | 0.48 | 0.47 | 0.55 | 0.58 |

It can be seen from the above table 1, that both the gloss and the anti-slip property of the crystallization agents of the present invention are superior to those of the crystallization agent products in the prior art.

**Examples 4 and 5: Influence of polypropylene wax content on gloss and anti-slip property of marble**

The influence of the content of a polyolefin wax in a crystallization agent product on the gloss and anti-slip property of a marble surface is also tested in the present invention. The amount of the polyolefin wax added is adjusted and the percentage of deionized water added is adjusted, while the following components remain unchanged.

| Component | Percentage | Function |
|---|---|---|
| magnesium fluorosilicate | 20.0% | fluorosilicate |
| fumaric acid | 2.0% | acid conditioner |

(continued)

| Component | Percentage | Function |
|---|---|---|
| citric acid | 2.0% | acid conditioner |
| ethylene glycol monobutyl ether | 2.5% | fast drying agent |

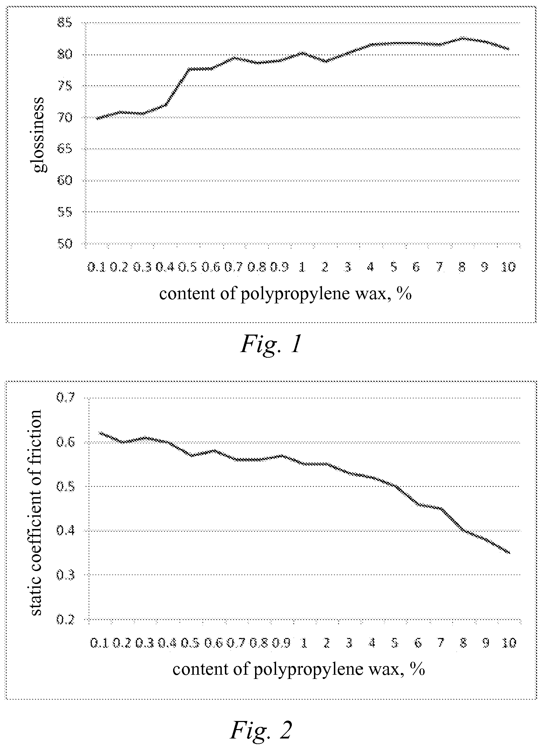

The test method as stated in example 3 is used. The figure 1 thus obtained is a curve diagram of the measured gloss of marble versus the contents of polypropylene wax in the present invention; figure 2 is a curve diagram of the measured coefficient of friction (COF) of marble versus the contents of polypropylene wax in the present invention.

It can be seen from figure 1 and figure 2, when the crystallization agents containing a polypropylene wax are applied to marble stone, the moving trends of the gloss and the coefficient of friction are opposite to each other, that is to say, by way of increasing the content of the polypropylene wax in the crystallization agent, the gloss is increased while the data of coefficient of friction decreases. The present inventor has found that within a certain range of the polypropylene wax content, the gloss level tends to be stable, while the coefficient of friction decreases sharply, that is to say, the stone surface becomes more smooth. The polyolefin wax is hereby adjusted with respect to the other components of the crystallization agent, so that the crystallization agent product of the present invention has required gloss and good anti-slip property at the same time.

## Claims

1.    Use of a composition comprising 0.5-5% by weight of a polyolefin wax; 10-30% by weight of fluorosilicic acid or a fluorosilicate; 1-6% by weight of an acid conditioner selected from fumaric acid, citric acid, 2,3-dihydroxybutanedioic acid, and mixtures thereof; 0.5-5% by weight of a fast drying agent selected from ethylene glycol methyl ether, ethylene glycol butyl ether, diethylene glycol butyl ether, propylene glycol methyl ether, dipropylene glycol methyl ether, propylene glycol propyl ether, dipropylene glycol propyl ether, propylene glycol butyl ether, propylene glycol methyl ether acetate, dipropylene glycol methyl ether acetate, dipropylene glycol dimethyl ether, diethylene glycol methyl ether, and mixtures thereof; and water as balance; wherein said polyolefin wax is a polypropylene wax and is added in the form of an emulsion, and the solid content of the polyolefin wax emulsion is in a range of 20% to 50% by weight,
     wherein the evaporation rate of said fast drying agent is greater than 0.01,
     wherein said polyolefin wax emulsion has a particle size in a range of 50 to 200 nm as determined by a BDL-B surface potential particle size analyzer, a pH value in the range of 4 to 10 and a viscosity in a range of 100 to 1000 mPas (100 to 1000 cps),
     wherein said polyolefin wax emulsion is formed by emulsifying a polyolefin wax with an emulsifier with an HLB value of 8 to 18, and
     wherein the number-average molecular weight $M_n$ of said polyolefin wax is between 1000 and 20000 and its dropping point is 60 to 180 °C according to ASTM D3954-1994(2004);
     for providing a glossy finish with anti-slip properties to stone in a single step.

2.    The use according to claim 1, **characterized in that** said polyolefin wax emulsion is a cationic polyolefin wax emulsion.

3.    The use according to claim 1, **characterized in that** said emulsifier is a cationic surfactant.

4.    The use according to claim 3, **characterized in that** said emulsifier is an alkyl ammonium salt, wherein the alkyl is a linear or nonlinear alkyl with 12 to 20 carbon atoms,

5.    The use according to any one of claims 1 to 2, **characterized in that** said crystallization agent comprises 1.0%-3.0% of said polyolefin wax.

## Patentansprüche

1.    Verwendung einer Zusammensetzung mit 0,5-5 Gew.-% eines Polyolefinwachses;

     10-30 Gew.-% Fluorkieselsäure oder eines Fluorsilikats;
     1-6 Gew.-% eines Säurekonditionierers, ausgewählt aus Fumarsäure, Zitronensäure, 2,3-Dihydroxybutandisäure und Gemischen davon;

0,5-5 Gew.-% eines schnell trocknenden Mittels, ausgewählt aus Ethylenglykolmethylether, Ethylenglykolbutylether, Diethylenglykolbutylether, Propylenglykolmethylether, Dipropylenglykolmethylether, Propylenglykolpropylether, Dipropylenglykolpropylether, Propylenglykolbutylether, Propylenglykolmethyletheracetat, Dipropylenglykolmethyletheracetat, Dipropylenglykoldimethylether, Diethylenglykolmethylether und Gemischen davon; und

Wasser als Gleichgewicht;

wobei das Polyolefinwachs ein Polypropylenwachs ist und in Form einer Emulsion zugesetzt wird und der Feststoffgehalt der Polyolefinwachsemulsion in einem Bereich von 20 bis 50 Gew.-% liegt, wobei die Verdampfungsrate des schnelltrocknenden Mittels größer als 0,01 ist, wobei die Polyolefinwachsemulsion eine Partikelgröße in einem Bereich von 50 bis 200 nm aufweist, wie durch einen BDL-B-Oberflächenpotenzial-Partikelgrößenanalysator bestimmt, einen pH-Wert im Bereich von 4 bis 10 und eine Viskosität in einem Bereich von 100 bis 1000 mPas (100 bis 1000 cps), wobei die Polyolefinwachsemulsion durch Emulgieren eines Polyolefinwachses mit einem Emulgator mit einem HLB-Wert von 8 bis 18 gebildet wird und wobei das Zahlenmittel des Molekulargewichts Mn des Polyolefinwachses zwischen 1000 und 20000 beträgt und sein Tropfpunkt 60 bis 180 °C gemäß ASTM D3954-1994 (2004) beträgt;

für die Bereitstellung einer glänzenden Oberfläche mit rutschfesten Eigenschaften für Stein in einem einzigen Schritt.

2. Verwendung nach Anspruch 1, **dadurch gekennzeichnet, dass** die Polyolefinwachsemulsion eine kationische Polyolefinwachsemulsion ist.

3. Verwendung nach Anspruch 1, **dadurch gekennzeichnet, dass** der Emulgator ein kationisches Tensid ist.

4. Verwendung nach Anspruch 3, **dadurch gekennzeichnet, dass** der Emulgator ein Alkylammoniumsalz ist, wobei das Alkyl ein lineares oder nichtlineares Alkyl mit 12 bis 20 Kohlenstoffatomen ist.

5. Verwendung nach einem der Ansprüche 1 bis 2, **dadurch gekennzeichnet, dass** das Kristallisationsmittel 1,0 %-3,0 % des Polyolefinwachses umfasst.

**Revendications**

1. Utilisation d'une composition comprenant 0,5 à 5 % en poids d'une cire de polyoléfine ;

10 à 30 % en poids d'acide fluorosilicique ou d'un fluorosilicate ; 1 à 6 % en poids d'un conditionneur d'acide choisi parmi l'acide fumarique, l'acide citrique, l'acide 2,3-dihydroxybutanedioïque et leurs mélanges ; 0,5 à 5 % en poids d'un agent de séchage rapide choisi parmi l'éther méthylique d'éthylène glycol, l'éther butylique d'éthylène glycol, l'éther butylique de diéthylène glycol, l'éther méthylique de propylène glycol, l'éther méthylique de dipropylène glycol, l'éther propylique de propylène glycol, l'éther propylique de dipropylène glycol, l'éther butylique de propylène glycol, l'acétate d'éther méthylique de propylène glycol, l'acétate d'éther méthylique de dipropylène glycol, l'éther diméthylique de dipropylène glycol, l'éther méthylique de diéthylène glycol et leurs mélanges ; et

de l'eau comme reste ; ladite cire de polyoléfine étant une cire de polypropylène et étant ajoutée sous la forme d'une émulsion, et la teneur en solide de l'émulsion de cire de polyoléfine étant dans une plage de 20 % à 50 % en poids,

le taux d'évaporation dudit agent de séchage rapide étant supérieur à 0,01, ladite émulsion de cire de polyoléfine ayant une taille de particules dans une plage de 50 à 200 nm telle que déterminée par un analyseur de taille de particules de potentiel de surface BDL-B, une valeur de pH dans la plage de 4 à 10 et une viscosité dans une plage de 100 à 1 000 mPa (100 à 1 000 cP),

ladite émulsion de cire de polyoléfine étant formée en émulsifiant une cire de polyoléfine au moyen d'un émulsifiant avec une valeur HLB de 8 à 18, et

le poids moléculaire moyen en nombre Mn de ladite cire de polyoléfine étant entre 1 000 et 20 000 et son point de goutte étant de 60 à 180 °C selon l'ASTM D3954-1994 (2004) ; pour fournir une finition brillante dotée de propriétés antidérapantes à la pierre en une seule étape.

2. Utilisation selon la revendication 1, **caractérisée en ce que** ladite émulsion de cire de polyoléfine est une émulsion de cire de polyoléfine cationique.

**3.** Utilisation selon la revendication 1, **caractérisée en ce que** ledit émulsifiant est un tensioactif cationique.

**4.** Utilisation selon la revendication 3, **caractérisée en ce que** ledit émulsifiant est un sel d'alkylammonium, l'alkyle étant un alkyle linéaire ou non linéaire de 12 à 20 atomes de carbone.

**5.** Utilisation selon l'une quelconque des revendications 1 à 2, **caractérisée en ce que** ledit agent de cristallisation comprend 1,0 % à 3,0 % de ladite cire de polyoléfine.

*Fig. 1*

*Fig. 2*

**EP 2 991 953 B1**

**REFERENCES CITED IN THE DESCRIPTION**

**Patent documents cited in the description**

- US 4738876 A
- EP 0207307 A
- EP 0617099 A
- US 5830536 A
- US 4756766 A
- WO 2006092425 A